# EUROPEAN PATENT APPLICATION

(11) **EP 4 645 669 A1**
(43) Date of publication of application: **05.11.2025**
(21) Application number: 23910121.5
(22) Date of filing: 13.12.2023
(51) Int. Cl.: H02M 7/217, H02M 3/335, H02M 1/42, H02J 7/06, H02J 7/00

(54) **THREE-PORT CONTROL METHOD, CONVERTER, STORAGE MEDIUM, POWER SUPPLY, AND CONTROLLER**

(30) Priority: 30.12.2022 CN 202211713351
(71) Applicant: United Automotive Electronic Systems Co., Ltd., Pudong New Area Shanghai 201206 (CN)
(72) Inventor: LIANG, Dong, Shanghai 201206 (CN); LIN, Lin, Shanghai 201206 (CN); WANG, Xiaokun, Shanghai 201206 (CN); ZHU, Shanshan, Shanghai 201206 (CN)
(74) Representative: Pohlman, Sandra M.
(86) International application number: PCT/CN2023/138308
(87) International publication number: WO 2024/140191

(57) **Abstract**

The present invention pertains to the field of power electronics, particularly relates to a method for controlling three ports, a converter, a storage medium, a power supply and a controller. In the method, circuits of preformed structures at three ports are configured to exchange energy among these ports through shared magnetic paths. Bridge-arm switching elements at first high-voltage port HV are reused to reduce the number of circuit elements in a high-voltage bridge arm and an associated drive circuit. Moreover, the use of a half bridge allows for a reduced number of high-voltage switching elements. Compared with the prior art, the use of fewer high-voltage switching elements and associated drive chips is enabled. Compared with existing isolated three-port converters and control schemes thereof, the same advantages are provided, while not being subject to limitations imposed by low-voltage switching elements, resulting in topologies operable at higher frequencies. Further, limitations on DC/DC power conversion are reduced, resulting in higher conversion efficiency. Apart from these, as fewer high-voltage switching elements are used, the system is improved in technical and economic specifications by providing enhanced reliability and a higher degree of integration.

## Description

### TECHNICAL FIELD

The present invention relates to the field of power electronics and, in particular, to a three-port control method, a converter, a storage medium, a power supply and a controller.

### BACKGROUND

New energy vehicles (NEVs) have been widely used, and high-voltage battery packs, which are energy output components of electric vehicles, require the use of more motors and power electronics components, compared to traditional fuel systems. Also required is the use of various power electronics units (PEUs), on-board chargers (OBCs), direct current-to-direct current (DC/DC) converters and battery management systems (BMS).

An OBC is typically made up of a first power factor correction (PFC) stage and a first high-voltage DC/DC converter stage connected in series with the first PFC stage. The PFC may be implemented by a totem pole or three-phase full bridge, and the high-voltage DC/DC converter is a resonant structure like LLC or LC for charging a high-voltage battery.

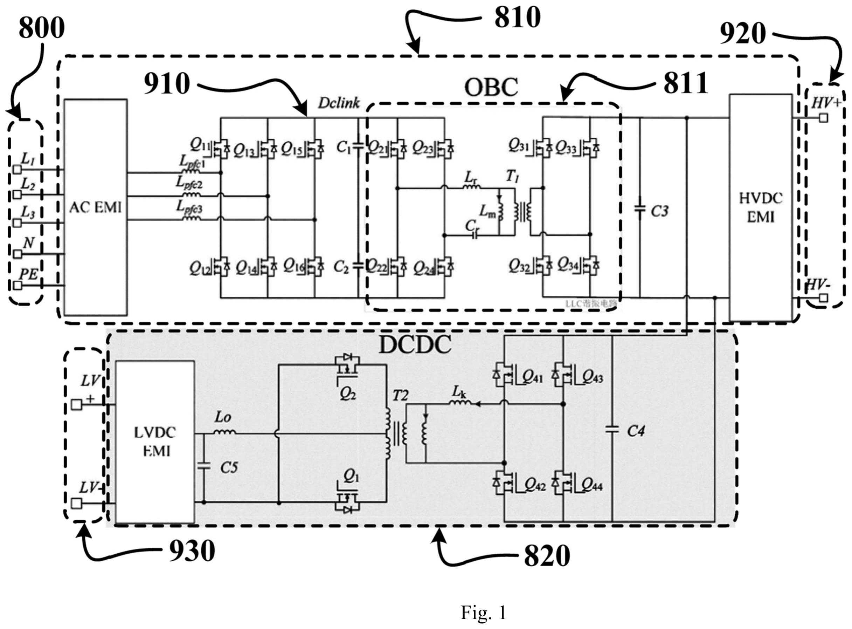

The DC/DC converter supplies power to a low-voltage load generally using a phase-shift full bridge. Fig. 1 shows how an on-board charger/converter (CharCon) in the prior art. This is disadvantageous in too many power devices and a complex driving configuration and is therefore not conducive to improving the miniaturization and integration of related systems.

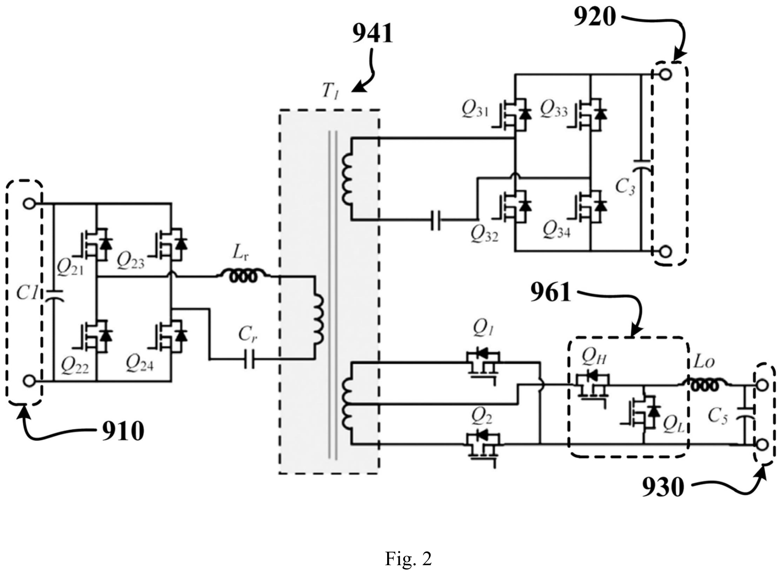

Pat. App. Pub. No. CN107623365A discloses an OBC integrating a resonant circuit and a DC/DC conversion circuit, as shown in Fig. 2. It has low-voltage terminal 930, which provides decoupling capability through MOS devices, but works at a frequency twice that of the resonant circuit. This is not favorable for high-frequency processing and the improvement of system integration. Further, the charge/discharge power and efficiency of the DC/DC converter is relatively low and not demonstrably advantageous over the system of Fig. 1.

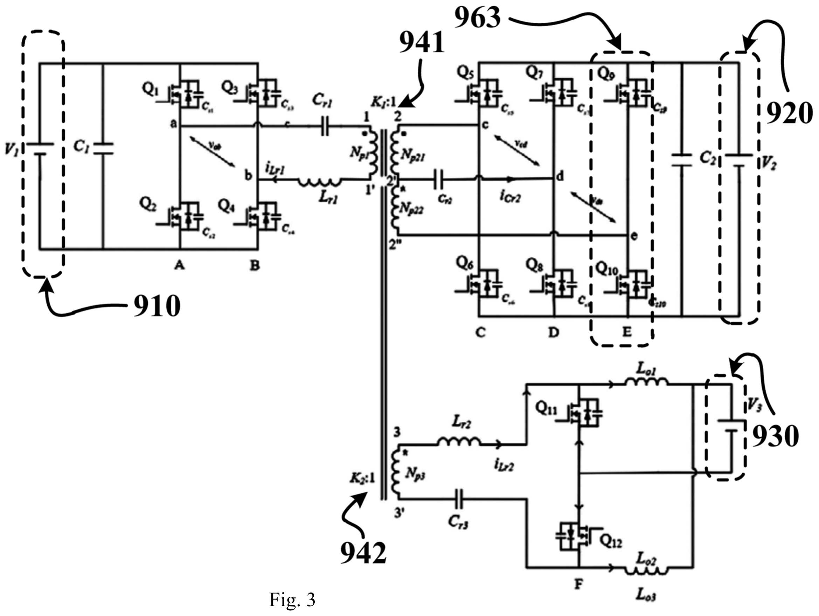

Pat. App. Pub. No. CN110649813A discloses another OBC integrating a resonant circuit and a DC/DC conversion circuit, as shown in Fig. 3. It adds high-voltage MOS devices (Q₉, Q₁₀) to high-voltage (HV) terminal 920, i.e., a HV battery terminal, which provides power decoupling capability. Compared with the configuration of Fig. 2, this topology dispenses with the need to add low-voltage MOS devices to low-voltage terminal 930 and allows operation at a higher frequency. Additionally, the power decoupling capability provided by the high-voltage MOS devices (Q₉, Q₁₀) reduces the limitation on power deliverable by the DC/DC converter, allowing it to operate with higher efficiency than that of Fig. 2. However, the added high-voltage MOS devices (Q₉, Q₁₀) are relatively expensive and still result in a considerable total number of MOS switches. These are not favorable for higher productivity and lower integration complexity.

### SUMMARY

In embodiments herein, a method for controlling three ports, including a first circuit configuration step and a second drive control step is disclosed. In the first circuit configuration step, a first conversion circuit at first port Dclink, a second conversion circuit at second port HV and a third conversion circuit at third port LV are configured. A first winding in the first conversion circuit shares a magnetic path, and exchange energy, with a second winding in the second conversion circuit through first electromagnetic element Tx1. A third winding in the second conversion circuit shares a magnetic path, and exchanges energy, with a fourth winding and a fifth winding in the third conversion circuit through second electromagnetic element Tx2.

In the first conversion circuit, first capacitive element C1 and second capacitive element C2 make up a first capacitive half-bridge, and first switching element Q1 and second switching element Q2 make up a first half-bridge switch. The first capacitive half-bridge constitutes a first resonant network together with the first winding under the control of the first half-bridge switch.

In the second conversion circuit, third capacitive element C3 and fourth capacitive element C4 make up a second capacitive half-bridge, and fifth switching element Q5 and sixth switching element Q6 make up a second half-bridge switch. Moreover, ninth switching element Q9 and tenth switching element Q10 make up a third bridge-arm switch. Center taps of the second winding and the third winding form a star-shaped wye through second-port first capacitive element Crs and the second capacitive half-bridge. The second half-bridge switch is connected in parallel to the third bridge-arm switch. The second winding and the second half-bridge switch form another star-shaped wye, and the third winding and the third bridge-arm switch form yet another star-shaped wye.

The third conversion circuit includes a third half-bridge switch, a third full-wave structure, a third full bridge or a current multiplier/rectifier and exchanges energy through a loop incorporating the fourth winding and the fifth winding.

In the second drive control step, drive timing and/or amplitude configurations of the switching elements in the first, second and third conversion circuits are adjusted to alter directions of energy conversion or transfer in the magnetic paths, and at any instant of time, only one of first port Dclink, second port HV and third port LV is connected to an excitation source, with one or both of the remaining ports being connected to a load.

Additionally, the third half-bridge switch may be made up of eleventh switching element Q11 and twelfth switching element Q12, wherein center taps of the fourth and fifth windings are connected to one terminal of sixth capacitive element C6 via third-port first inductive element Lo, and another terminal of sixth capacitive element C6 is connected to the fourth and fifth windings via eleventh switching element Q11 and twelfth switching element Q12, respectively.

Additionally, the method may further include a third configuration optimization step, in which first-port first capacitive element Cr and/or first-port first inductive element Lr is/are connected in series, and first-port second inductive element Lm in parallel, within the first resonant network. Further, first-port first inductive element Lr may be separate from, or magnetically integrated with, first electromagnetic element Tx1, and the star-shaped wye incorporating the third bridge-arm switch may be connected to the third winding via second-port first inductive element Lk. Second electromagnetic element Tx2 may be separate from, or magnetically integrated with, second-port first inductive element Lk and third-port first inductive element Lo.

Additionally, the method may further include a fourth parameter optimization step, wherein the second conversion circuit further includes second-port second inductive element Lrs and second-port second capacitive element Cs, which are connected in series with each other and then to bridge arms of the second half-bridge switch via the second winding, thereby forming a CLLLC resonant tank. In the fourth parameter optimization step, parameters may be adjusted according to preset resonance thresholds, as required by a mode of operation, or by the load. The resonance thresholds may include a first resonance threshold and a second resonance threshold. If a ratio of parameters of first-port second inductive element Lm and first-port first inductive element Lr is greater than the first resonance threshold, then the second conversion circuit may be configured as a series-connected LC resonant tank. If the ratio of the parameters of first-port second inductive element Lm and first-port first inductive element Lr is less than the second resonance threshold, then the second conversion circuit may be configured as an LLC resonant tank. If second-port second inductive element Lrs is omitted, then the second conversion circuit may be configured as a CLLC tank.

Additionally, the first capacitive half-bridge may be provided by or replaced with an output bus capacitor in a power factor corrector (PFC) connected to first port Dclink.

Specifically, second port HV may be connected to a second battery bank through two terminals of the second capacitive half-bridge, or after being connected in parallel to fifth capacitive element C5, and third port LV may be connected to a third battery bank through the terminals of sixth capacitive element C6. A second rated voltage of the second battery bank may be higher than a third rated voltage of the third battery bank, with a difference between the second and third rated voltages being greater than a preset voltage threshold.

In the second drive control step, depending on the drive timing and/or amplitude configurations in the first circuit configuration step, operation may be initiated in a first pre-charge mode, a second low-voltage charging/driving mode, a third charging mode or a fourth inverter mode. In the first pre-charge mode, a DC excitation may be provided by third port LV, and second port HV may be connected to the load, without participation of first port Dclink in energy exchange. In the second low-voltage charging/driving mode, a DC excitation may be provided by second port HV, and third port LV may be connected to the load, without participation of first port Dclink in energy exchange. In the third charging mode, an AC excitation may be provided by first port Dclink, and second port HV and/or third port LV may be connected to the load. In the fourth inverter mode, a DC excitation may be provided by second port HV, while the other ports may be connected to the load.

In embodiments herein, there is also disclosed a converter including a first conversion unit and a second drive control unit. The first conversion unit includes a first conversion circuit at first port Dclink, a second conversion circuit at second port HV and a third conversion circuit at third port LV.

A first winding in the first conversion circuit shares a magnetic path, and exchanges energy, with a second winding in the second conversion circuit through first electromagnetic element Tx1. A third winding in the second conversion circuit shares a magnetic path, and exchanges energy, with a fourth winding and a fifth winding in the third conversion circuit through second electromagnetic element Tx2. In the first conversion circuit, first capacitive element C1 and second capacitive element C2 make up a first capacitive half-bridge, and first switching element Q1 and second switching element Q2 make up a first half-bridge switch. The first capacitive half-bridge constitutes a first resonant network together with the first winding under the control of the first half-bridge switch.

Further, in the second conversion circuit, third capacitive element C3 and fourth capacitive element C4 make up a second capacitive half-bridge, and fifth switching element Q5 and sixth switching element Q6 make up a second half-bridge switch. Moreover, ninth switching element Q9 and tenth switching element Q10 make up a third bridge-arm switch, and center taps of the second and third windings form a star-shaped wye through second-port first capacitive element Crs and the second capacitive half-bridge. The second half-bridge switch is connected in parallel to the third bridge-arm switch. The second winding and the second half-bridge switch form another star-shaped wye, and the third winding and the third bridge-arm switch form yet another star-shaped wye. The third conversion circuit includes a third half-bridge switch, a third full-wave structure, a third full bridge or a current multiplier/rectifier and exchanges energy through a loop incorporating the fourth and fifth windings.

Furthermore, the second drive control unit includes drive or synchronization circuits associated respectively with the first, second and third conversion circuits and is configured to make drive timing and/or amplitude adjustments to the switching elements to alter directions of energy conversion or transfer in the magnetic paths, wherein at any instant of time, only one of first port Dclink, second port HV and third port LV is connected to an excitation source, with one or both of the remaining ports being connected to a load.

Additionally, the third half-bridge switch may be made up of eleventh switching element Q11 and twelfth switching element Q12, wherein center taps of the fourth and fifth windings are connected to one terminal of sixth capacitive element C6 via third-port first inductive element Lo, and another terminal of sixth capacitive element C6 is connected to the fourth and fifth windings via eleventh switching element Q11 and twelfth switching element Q12, respectively.

Additionally, the converter may further include a third configuration optimization unit including first-port first capacitive element Cr and/or first-port first inductive element Lr connected in series within the first resonant network, wherein: first-port second inductive element Lm is connected in parallel within the first resonant network; first-port first inductive element Lr is separated from, or magnetically integrated with, first electromagnetic element Tx1; the star-shaped wye incorporating the third bridge-arm switch is connected to the third winding via second-port first inductive element Lk; and second electromagnetic element Tx2 is separated from, or magnetically integrated with, second-port first inductive element Lk and third-port first inductive element Lo.

Additionally, the converter may further include a fourth parameter optimization unit including second-port second inductive element Lrs and second-port second capacitive element Cs, which are connected in series with each other and then to bridge arms of the second half-bridge switch via the second winding, thereby forming a CLLLC resonant tank.

Specifically, the second conversion circuit may be configured as a series-connected LC resonant tank if a ratio of parameters of first-port second inductive element Lm and first-port first inductive element Lr is greater than a first resonance threshold, or as an LLC resonant tank if the ratio of the parameters of first-port second inductive element Lm and first-port first inductive element Lr is less than a second resonance threshold, or as a CLLC tank if second-port second inductive element Lrs is omitted.

Additionally, the first capacitive half-bridge may be provided by or replaced with an output bus capacitor in a power factor corrector (PFC) connected to first port Dclink.

Additionally, second port HV may be connected to a second battery bank through two terminals of the second capacitive half-bridge, or after being connected in parallel to fifth capacitive element C5, and third port LV may be connected to a third battery bank through the terminals of sixth capacitive element C6. A second rated voltage of the second battery bank may be higher than a third rated voltage of the third battery bank, with a difference between the second and third rated voltages being greater than a preset voltage threshold.

Additionally, in a second drive control step, depending on drive timing and/or amplitude configurations in a first circuit configuration step, operation may be initiated in a first pre-charge mode, a second low-voltage charging/driving mode, a third charging mode or a fourth inverter mode.

In the first pre-charge mode, a DC excitation may be provided by third port LV, and second port HV may be connected to the load, without participation of first port Dclink in energy exchange. In the second low-voltage charging/driving mode, a DC excitation may be provided by second port HV, and third port LV may be connected to the load, without participation of first port Dclink in energy exchange. In the third charging mode, an AC excitation may be provided by first port Dclink, and second port HV and/or third port LV may be connected to the load. In the fourth inverter mode, a DC excitation may be provided by second port HV, while the other ports may be connected to the load.

Compared with the prior art, in methods and products embodying the present invention, circuits of preformed structures at three ports are configured to exchange energy among these ports through shared magnetic paths. Bridge-arm switching elements at first high-voltage port HV are reused to reduce the number of circuit elements in a high-voltage bridge arm and an associated drive circuit. Moreover, the use of a half bridge allows for a reduced number of high-voltage switching elements. Compared with the prior art, the use of fewer high-voltage switching elements and associated drive chips is enabled. Compared with existing isolated three-port converters and control schemes thereof, the same advantages are provided, while not being subject to limitations imposed by low-voltage switching elements, resulting in topologies operable at higher frequency. Further, limitations on DC/DC power conversion are reduced, resulting in higher conversion efficiency. Apart from these, as fewer high-voltage switching elements are used, the system is improved in technical and economic specifications with enhanced reliability and a higher degree of integration.

On the above basis, in embodiments herein, there is also disclosed a computer storage medium including a storage medium body storing thereon a computer program, which, when executed by a microprocessor, implements any of the methods for controlling three ports, as defined above. Also disclosed a power supply and a controller, each including any of the converters as defined above, and/or any of the computer storage media as defined above, wherein the controller is configured to provide the switching elements in the converter with necessary drive and/or synchronization signals.

It should be noted that, as used herein, the terms "first", "second" and the like are only for distinguishing different elements, and are not intended to be limiting or indicate or imply relative importance or significance. Where an element is described by the term "first", "second" or the like, it is indicated that at least one such element is present.

### BRIEF DESCRIPTION OF THE DRAWINGS

In order to more clearly specify the subject-matter of the present invention and to facilitate an understanding of its advantages, features and objects, the invention is described in detail below with reference to the accompanying drawings, which are incorporated in and constitute a part of this specification, illustrate the subject matter of the invention together with several embodiments thereof, but are not intended to limit the application in any sense.

Like reference numerals refer to like elements throughout the several views, in which:
Fig. 1 illustrates an on-board charger-converter (CharCon) in the prior art;
Fig. 2 illustrates a first isolated three-port converter in the prior art;
Fig. 3 illustrates a second isolated three-port converter in the prior art;
Fig. 4 illustrates the structure and components of a converter, according to an embodiment of the present invention;
Fig. 5 schematically illustrates operation of the converter in a first pre-charge mode, according to an embodiment of the present invention;
Fig. 6 schematically illustrates operation of the converter in a second low-voltage charging/driving mode, according to an embodiment of the present invention;
Fig. 7 schematically illustrates operation of the converter in a third charging mode, according to an embodiment of the present invention;
Fig. 8 schematically illustrates operation of the converter in a fourth inverter mode, according to an embodiment of the present invention;
Fig. 9 schematically illustrates a first optimized converter, according to an embodiment of the present invention;
Fig. 10 schematically illustrates a second optimized converter, according to an embodiment of the present invention;
Fig. 11 shows drive timing and key waveforms in the converter, according to an embodiment of the present invention;
Fig. 12 shows drive timing and key waveforms in the second optimized converter, according to an embodiment of the present invention;
Fig. 13 graphically illustrates a flowchart of a method, according to an embodiment of the present invention;
Fig. 14 schematically illustrates the structure and components of a converter, according to an embodiment of the present invention;
Fig. 15 schematically illustrates the layout of a first product, according to an embodiment of the present invention;
Fig. 16 schematically illustrates the layout of a second product, according to an embodiment of the present invention;
Fig. 17 schematically illustrates the layout of a third product, according to an embodiment of the present invention; and
Fig. 18 schematically illustrates the layout of a fourth product, according to an embodiment of the present invention.

### List of Reference Numerals

100 first circuit configuration step
200 second drive control step
300 third configuration optimization step
400 fourth parameter optimization step
500 converter
510 first conversion unit
520 second drive control unit
530 third configuration optimization unit
540 fourth parameter optimization unit
600 drive control signal
601 first switch drive signal
602 second switch drive signal
603 third switch drive signal
604 fourth switch drive signal
605 fifth switch drive signal
606 sixth switch drive signal
607 seventh switch drive signal
608 eighth switch drive signal
609 ninth switch drive signal
610 tenth switch drive signal
611 eleventh switch drive signal
612 twelfth switch drive signal
700 characteristic output current
710 first-port resonant current Dclinkc
720 second-port resonant current HVc
722 current through Lk in second-port bridge arm
730 third output current Lo
800 AC grid
810 on-board charger (OBC)
811 LLC resonant circuit
820 direct current-to-direct current (DC/DC) converter
900 vehicle
901 controller
903 computer storage medium
906 mobile (on-board) power supply
910 first (AC grid) port Dclink
911 first capacitive element C1
912 second capacitive element C2
913 second switching element Q2
914 first switching element Q1
920 second (high-voltage DC) port HV
921 fifth switching element Q5
922 sixth switching element Q6
923 third capacitive element C3
924 fourth capacitive element C4
925 ninth switching element Q9
926 tenth switching element Q10
927 fifth capacitive element C5
928 seventh switching element Q7
929 eighth switching element Q8
930 third (low-voltage DC) port LV
931 eleventh switching element Q11
932 twelfth switching element Q12
933 sixth capacitive element C6
934 third-port first inductive element Lo
941 first electromagnetic element Tx1
942 second electromagnetic element Tx2
951 first-port first capacitive element Cr
952 first-port first inductive element Lr
953 first-port second inductive element Lm
954 second-port first capacitive element Crs
955 second-port first inductive element Lk
956 second-port second inductive element Lrs
957 second-port second capacitive element Cs
961 first MOS devices for power decoupling at low-voltage terminal
963 second MOS devices for power decoupling at high-voltage terminal
971 first winding
972 second winding
973 third winding
974 fourth winding
975 fifth winding
981 first conversion circuit
982 second conversion circuit
983 third conversion circuit
991 first pre-charge mode
992 second low-voltage charging/driving mode
993 third charging mode
994 fourth inverter mode
995 first optimized converter embodying present invention
996 second optimized converter embodying present invention
999 three-port converter embodying present invention

### DETAILED DESCRIPTION

The present invention will be described in greater detail below with reference to the accompanying drawings, which illustrate embodiments thereof. Of course, the specific embodiments described below are only for explaining the subject matter of the present invention, and are not intended to limit the invention in any sense. Further, the embodiments described and illustrated herein are merely intended to exemplify some aspects of the invention and are not exhaustive.

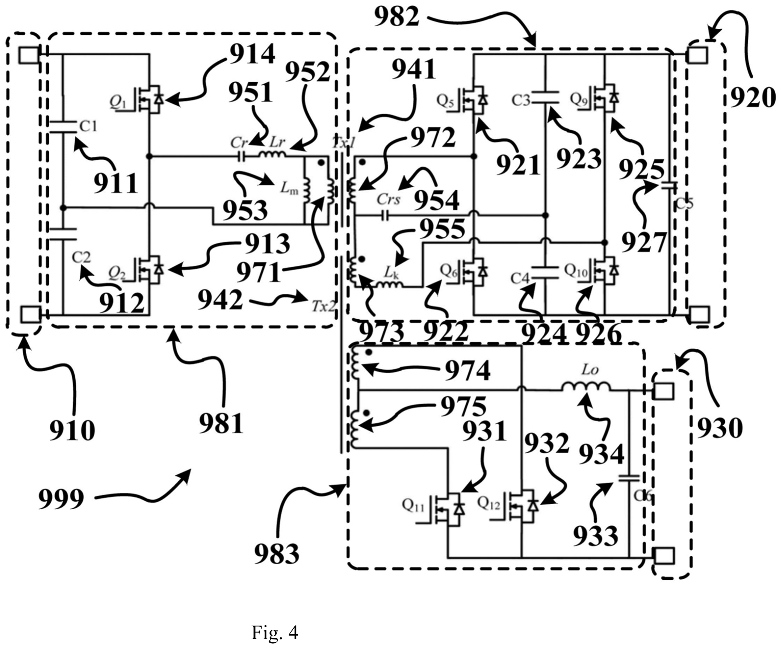

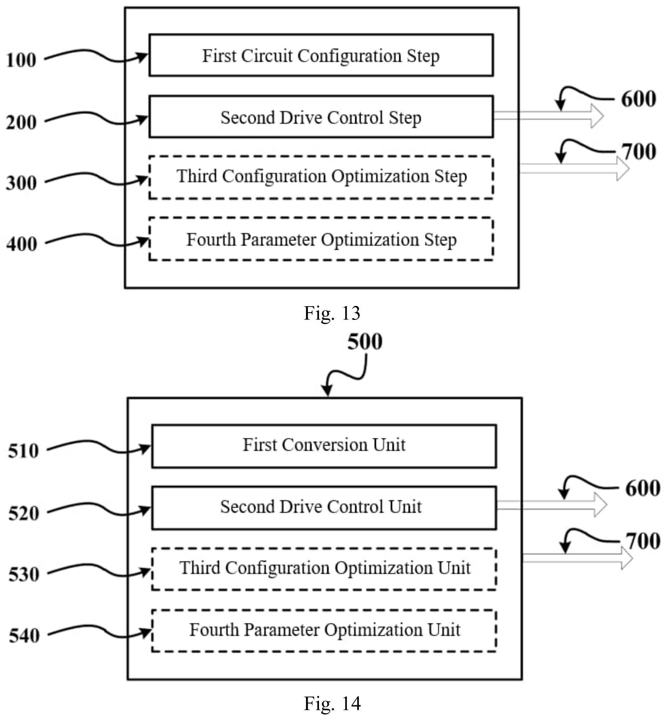

Fig. 13 shows a method for controlling three ports, which includes first circuit configuration step 100 and second drive control step 200. As shown in Fig. 4, in first circuit configuration step 100, first conversion circuit 981 at first port Dclink, second conversion circuit 982 at second port HV and third conversion circuit 983 at third port LV are configured.

Specifically, first winding 971 in first conversion circuit 981 shares a magnetic path, and exchanges energy, with second winding 972 in second conversion circuit 982 through first electromagnetic element Tx1. Third winding 973 in second conversion circuit 982 shares a magnetic path, and exchanges energy, with fourth winding 974 and fifth winding 975 in third conversion circuit 983 through second electromagnetic element Tx2.

In first conversion circuit 981, a first capacitive half-bridge is made up of first capacitive element C1 and second capacitive element C2, and a first half-bridge switch of first switching element Q1 and second switching element Q2. The first capacitive half-bridge constitutes a first resonant network together with first winding 971, under the control of the first half-bridge switch.

In second conversion circuit 982 at second port HV, a second capacitive half-bridge is made up of third capacitive element C3 and fourth capacitive element C4, a second half-bridge switch of fifth switching element Q5 and sixth switching element Q6, and a third bridge-arm switch of ninth switching element Q9 and tenth switching element Q10. Center taps of second winding 972 and third winding 973 form a star-shaped wye through second-port first capacitive element Crs and the second capacitive half-bridge. The second half-bridge switch is connected in parallel to the third bridge-arm switch, and second winding 972 and the second half-bridge switch form another star-shaped wye. Third winding 973 and the third bridge-arm switch form yet another star-shaped wye.

Third conversion circuit 983 at third port LV includes a third half-bridge switch, a third full-wave structure and a third full bridge or current multiplier/rectifier. Third conversion circuit 983 exchanges energy through a loop incorporating fourth winding 974 and fifth winding 975.

In second drive control step 200, drive timing and/or amplitude adjustments are made to the switching elements in first conversion circuit 981, second conversion circuit 982 and third conversion circuit 983 to alter directions of energy conversion or transfer in the magnetic paths. At any instant of time, only one of first port Dclink, second port HV and third port LV is connected to an excitation source, with one or both of the remaining ports being connected to a load.

Specifically, the third half-bridge switch is made up of eleventh switching element Q11 and twelfth switching element Q12. Center taps of fourth winding 974 and fifth winding 975 are connected to one terminal of sixth capacitive element C6 via third-port first inductive element Lo, and another terminal of sixth capacitive element C6 is connected to fourth winding 974 and fifth winding 975 through eleventh switching element Q11 and twelfth switching element Q12, respectively.

The method may further include third configuration optimization step 300, in which first-port first capacitive element Cr and/or first-port first inductive element Lr is/are connected in series, and first-port second inductive element Lm in parallel, in the first resonant network. First-port first inductive element Lr is separate from, or magnetically integrated with, first electromagnetic element Tx1. The star-shaped wye incorporating the third bridge-arm switch is connected to third winding 973 via second-port first inductive element Lk. Second electromagnetic element Tx2 is separate from, or magnetically integrated with, second-port first inductive element Lk and third-port first inductive element Lo.

The method may further include fourth parameter optimization step 400, which allows for improved or optimized control. Second conversion circuit 982 may further include second-port second inductive element Lrs and second-port second capacitive element Cs, which are connected in series with each other and then to the bridge arms of the second half-bridge switch via second winding 972, thereby forming a CLLLC resonant tank.

Specifically, in fourth parameter optimization step 400, parameters may be adjusted according to preset resonance thresholds depending on the requirements of a mode of operation or load. The resonance thresholds include a first resonance threshold and a second resonance threshold. If a ratio of parameters of first-port second inductive element Lm and first-port first inductive element Lr is greater than the first resonance threshold, then second conversion circuit 982 provides a series-connected LC resonant tank. If the ratio of the parameters of first-port second inductive element Lm and first-port first inductive element Lr is less than the second resonance threshold, then second conversion circuit 982 provides an LLC resonant tank. If second-port second inductive element Lrs is omitted, second conversion circuit 982 provides a CLLC tank.

When drawing power from an AC grid, the first capacitive half-bridge may be replaced with, or provided by, an output bus capacitor in power factor corrector PFC connected to first port Dclink.

Further, second port HV is connected to a second battery bank through opposite terminals of the second capacitive half-bridge, or after being connected in parallel to fifth capacitive element C5. Third port LV is connected to a third battery bank through opposite terminals of sixth capacitive element C6. A second rated voltage of the second battery bank is higher than a third rated voltage of the third battery bank, and a difference between the second and third rated voltages is greater than a preset voltage threshold. In general, the second battery bank serves as a high-voltage power source, and the third battery bank is a low-voltage battery bank for supporting circuitry.

Specifically, depending on the drive timing and/or amplitude configurations in first circuit configuration step 100, operation is initiated in first pre-charge mode 991, second low-voltage charging/driving mode 992, third charging mode 993 or fourth inverter mode 994 in second drive control step 200. In first pre-charge mode 991, a DC excitation is provided by third port LV, and second port HV is coupled to a load, without participation of first port Dclink in energy exchange. In second low-voltage charging/driving mode 992, a DC excitation is provided by second port HV, and third port LV is coupled to the load, again without participation of first port Dclink in energy exchange. In third charging mode 993, an AC excitation is provided by first port Dclink, and second port HV and/or third port LV is/are coupled to the load. In fourth inverter mode 994, a DC excitation is provided by second port HV, and the other ports are coupled to the load.

In embodiments disclosed herein, there is also provided a converter 500 including first conversion unit 510 and second drive control unit 520, as shown in Fig. 14. Referring to Figs. 4 to 10, first conversion unit 510 includes first conversion circuit 981 at first port Dclink, second conversion circuit 982 at second port HV and third conversion circuit 983 at third port LV. First winding 971 in first conversion circuit 981 shares a magnetic path, and exchanges energy, with second winding 972 in second conversion circuit 982 through first electromagnetic element Tx1. Third winding 973 in second conversion circuit 982 shares a magnetic path, and exchanges energy, with fourth winding 974 and fifth winding 975 in third conversion circuit 983 through second electromagnetic element Tx2.

Specifically, in first conversion circuit 981, a first capacitive half-bridge is made up of first capacitive element C1 and second capacitive element C2, and a first half-bridge switch of first switching element Q1 and second switching element Q2. The first capacitive half-bridge constitutes a first resonant network together with first winding 971, under the control of the first half-bridge switch. In second conversion circuit 982, a second capacitive half-bridge is made up of third capacitive element C3 and fourth capacitive element C4, a second half-bridge switch of fifth switching element Q5 and sixth switching element Q6, and a third bridge-arm switch of ninth switching element Q9 and tenth switching element Q10. Center taps of second winding 972 and third winding 973 form a star-shaped wye through second-port first capacitive element Crs and the second capacitive half-bridge. The second half-bridge switch is connected in parallel to the third bridge-arm switch, and second winding 972 and the second half-bridge switch form another star-shaped wye. Third winding 973 and the third bridge-arm switch form yet another star-shaped wye. Conversion circuit 983 includes a third half-bridge switch, a third full-wave structure and a third full bridge or current multiplier/rectifier. Third conversion circuit 983 exchanges energy through a loop incorporating fourth winding 974 and fifth winding 975.

Second drive control unit 520 further includes drive or sync circuits associated respectively with first conversion circuit 981, second conversion circuit 982 and third conversion circuit 983. Second drive control unit 520 makes drive timing and/or amplitude adjustments to the switching elements to alter directions of energy conversion or transfer in the magnetic paths to provide various different modes of operation. At any instant of time, only one of first port Dclink, second port HV and third port LV is connected to an excitation source, with one or both of the remaining ports being connected to a load, or under loading.

Specifically, the third half-bridge switch is made up of eleventh switching element Q11 and twelfth switching element Q12. Center taps of fourth winding 974 and fifth winding 975 are connected to one terminal of sixth capacitive element C6 via third-port first inductive element Lo, and another terminal of sixth capacitive element C6 is connected to fourth winding 974 and fifth winding 975 through eleventh switching element Q11 and twelfth switching element Q12, respectively.

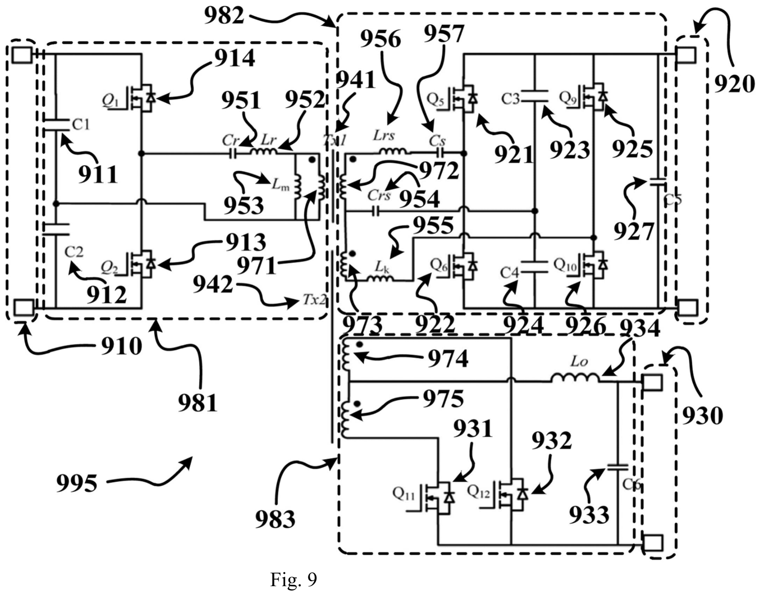

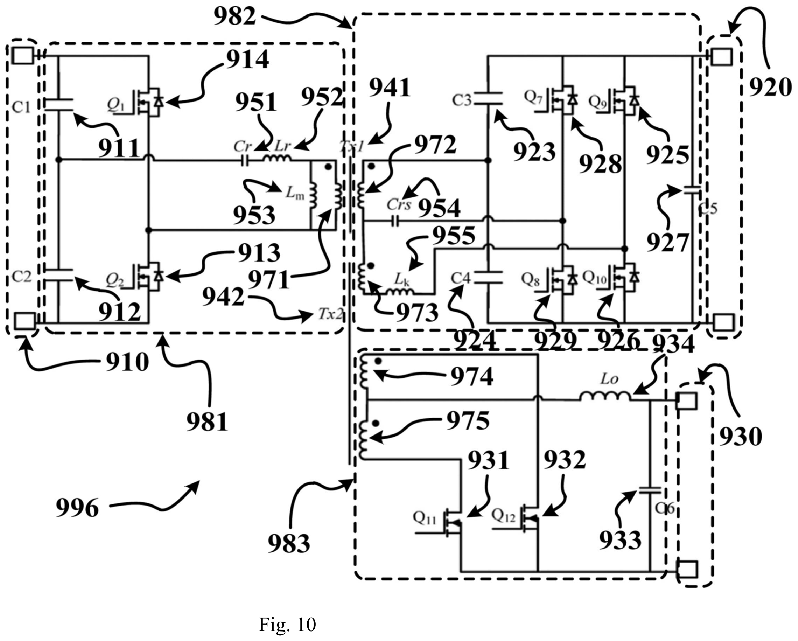

As shown Figs. 9 and 10, converter 500 may further include third configuration optimization unit 530, the third configuration optimization unit 530 includes first-port first capacitive element Cr and/or first-port first inductive element Lr. Within first resonant network, first-port first capacitive element Cr and/or first-port first inductive element Lr is/are connected in series, and first-port second inductive element Lm in parallel. First-port first inductive element Lr is separate from, or magnetically integrated with, first electromagnetic element Tx1. The star-shaped wye incorporating the third bridge-arm switch is connected to third winding 973 via second-port first inductive element Lk. Second electromagnetic element Tx2 is separate from, or magnetically integrated with, second-port first inductive element Lk and third-port first inductive element Lo.

Specifically, converter 500 may further include fourth parameter optimization unit 540, the fourth parameter optimization unit 540 includes second-port second inductive element Lrs and second-port second capacitive element Cs, which are connected in series with each other and then to the bridge arms of the second half-bridge switch via the second winding, thereby forming a CLLLC resonant tank. If a ratio of parameters of first-port second inductive element Lm and first-port first inductive element Lr is greater than a first resonance threshold, then second conversion circuit 982 provides a series-connected LC resonant tank. If the ratio of the parameters of first-port second inductive element Lm and first-port first inductive element Lr is less than the second resonance threshold, then second conversion circuit 982 provides an LLC resonant tank. If second-port second inductive element Lrs is omitted, second conversion circuit 982 provides a CLLC tank.

When drawing power from an AC grid, the first capacitive half-bridge may be replaced with, or provided by, an output bus capacitor in power factor corrector PFC connected to first port Dclink.

Further, second port HV is connected to a second battery bank through opposite terminals of the second capacitive half-bridge, or after being connected in parallel to fifth capacitive element C5. Third port LV is connected to a third battery bank through opposite terminals of sixth capacitive element C6. A second rated voltage of the second battery bank is higher than a third rated voltage of the third battery bank, and a difference between the second and third rated voltages is greater than a preset voltage threshold. Depending on the drive timing and/or amplitude configurations in first circuit configuration step 100, operation is initiated in first pre-charge mode 991, second low-voltage charging/driving mode 992, third charging mode 993 or fourth inverter mode 994 in second drive control step 200. In first pre-charge mode 991, a DC excitation is provided by third port LV, and second port HV is coupled to a load, without participation of first port Dclink in energy exchange. In second low-voltage charging/driving mode 992, a DC excitation is provided by second port HV, and third port LV is coupled to the load, again without participation of first port Dclink in energy exchange. In third charging mode 993, an AC excitation is provided by first port Dclink, and second port HV and/or third port LV is/are coupled to the load. In the fourth inverter mode, a DC excitation is provided by second port HV, and the other ports are coupled to the load.

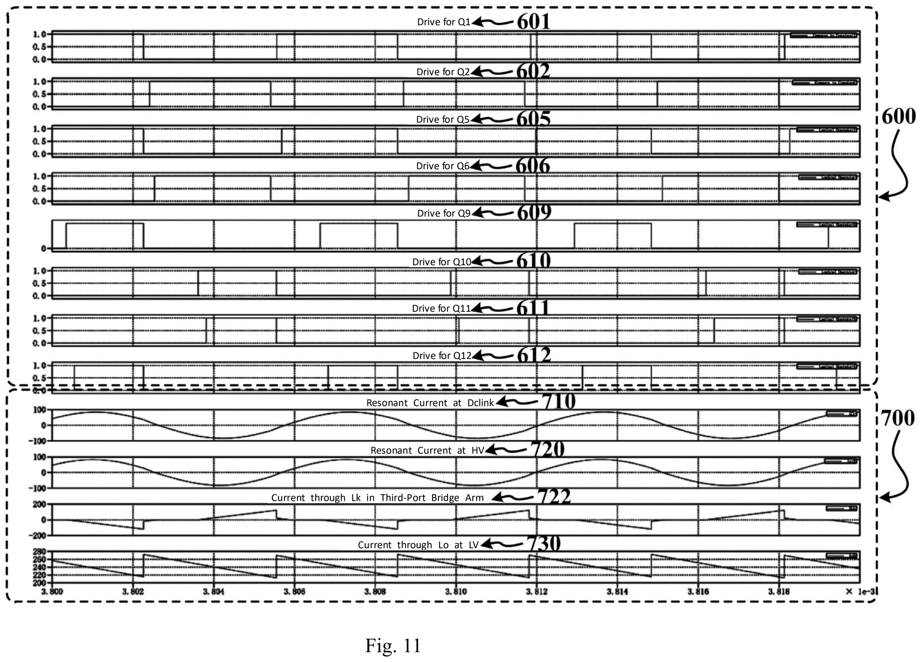

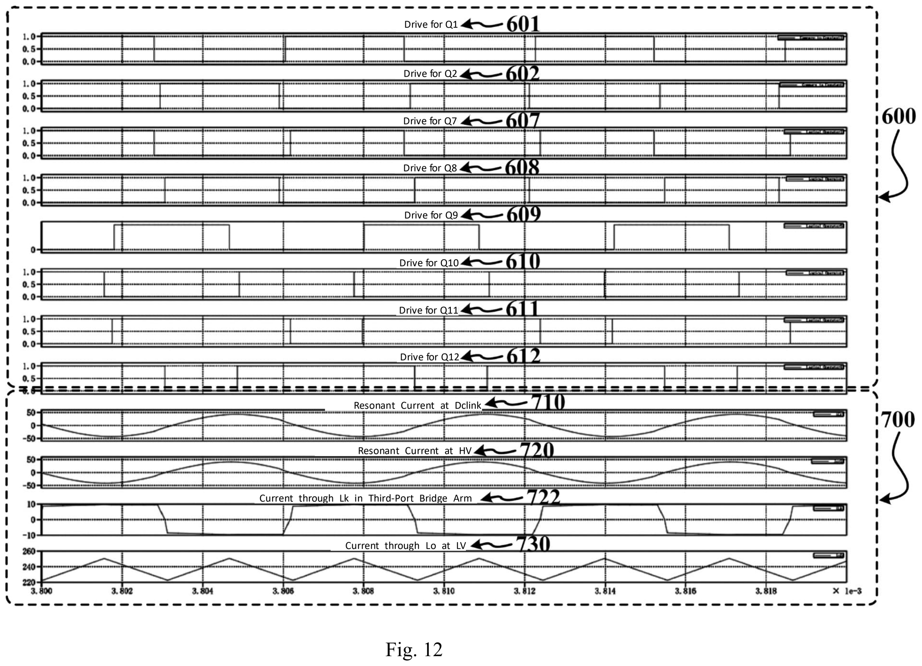

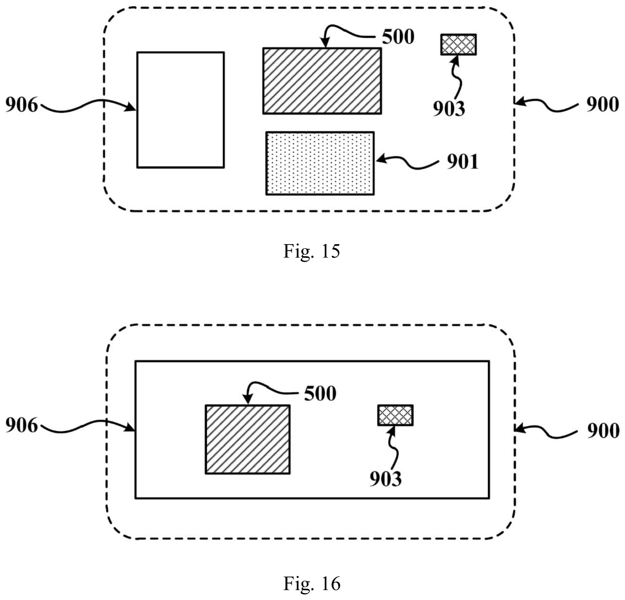

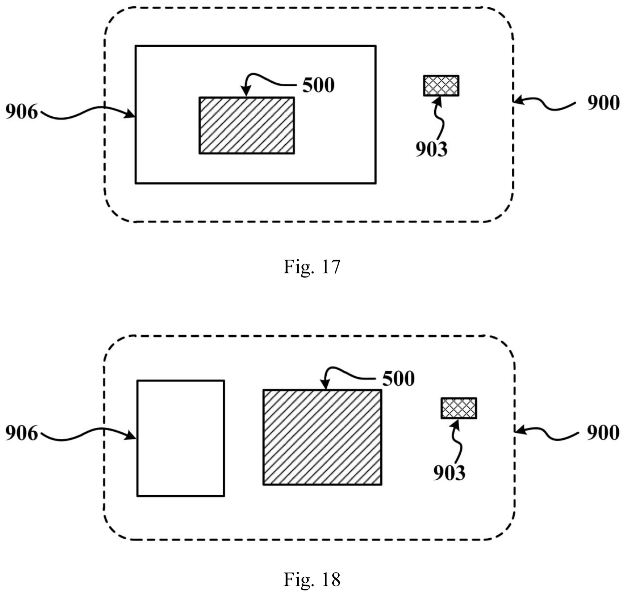

Also disclosed herein are three product embodiments: computer storage medium 903 including a storage medium body storing thereon a computer program, which, when executed by a microprocessor, implements any of the methods for three-port control discussed above; power supply 906, including any of converters 500 as discussed above and/or any of computer storage media 903 as discussed above, as shown in Figs. 16 to 17; and controller 901, including any of converters 500 as discussed above or configured to provide necessary drive and/or sync signals as shown in Figs. 11 and 12 to the switching elements in converter 500, and/or including any of computer storage media 903 as discussed above.

Isolated three-port converter 500 of Fig. 4 is an on-board charger (OBC) integrating the topologies of a resonant circuit and a DC/DC converter. Specifically, it is constructed from half-bridge capacitors C1, C2, half-bridge switching elements Q1, Q2, resonant networks Lr, Cr, resonant network Crs, half-bridge switch transistors Q5, Q6, half-bridge capacitors C3, C4, third bridge-arm switching elements Q9, Q10, filter capacitor C5, a rectifier bridge consisting of Q11 and Q12, filter inductor and capacitor Lo, C6, resonant transformer Tx1 and resonant transformer Tx2, at first port Dclink.

Specifically, according to embodiments disclosed herein, operation may be initiated in a first pre-charge mode, a second low-voltage charging/driving mode, a third charging mode or a fourth inverter mode, as detailed below.

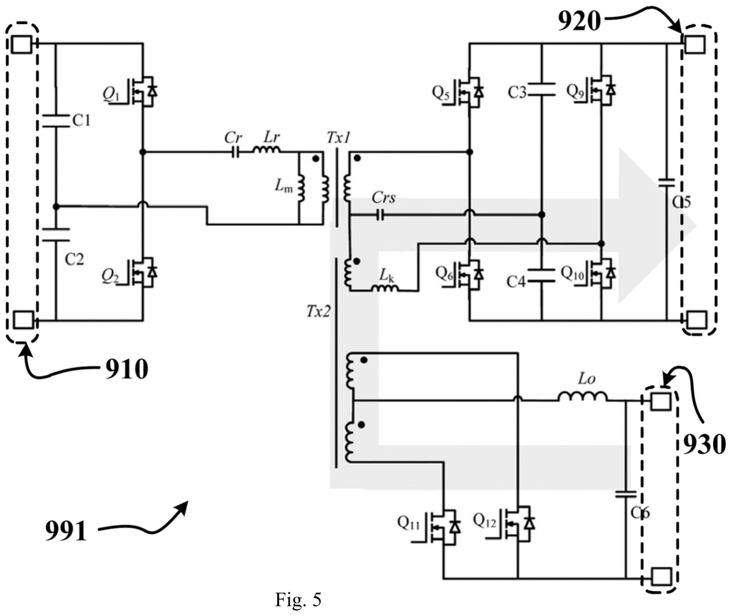

As shown in Fig. 5, when converter 500 operates in the first pre-charge mode, a current from a battery at third port LV flows through Lo, and Q11, Q12 are controlled to convert the power. Following voltage boosting in Tx2 and rectification by a half bridge consisting of C3, C4, Q9 and Q10, the energy is charged to a capacitor for a high-voltage battery, or transferred to Dclink through a half bridge consisting of C1, C2, Q1 and Q2 at Dclink.

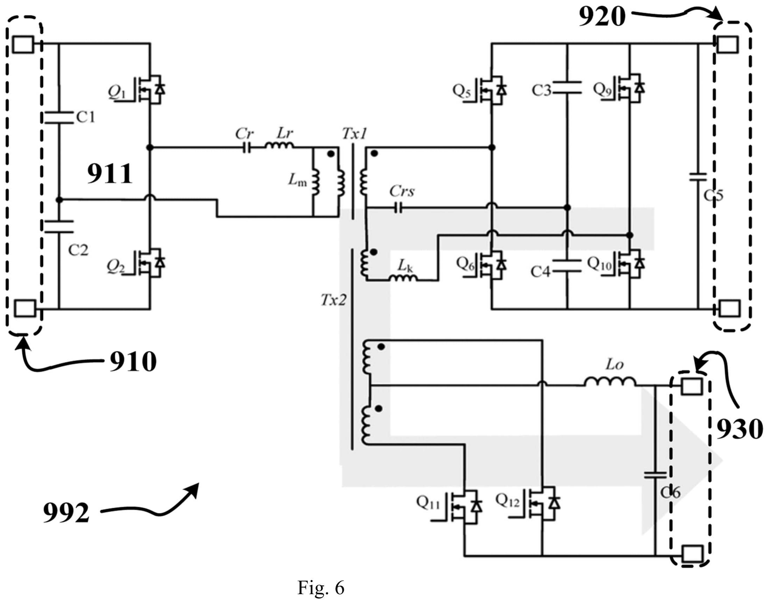

As shown in Fig. 6, when converter 500 operates in the second low-voltage charging/driving mode, energy is controlled to transfer from the high-voltage battery at second port HV towards a low-voltage battery at third port LV. It successively undergoes power conversion by the half bridge consisting of Q9, Q10, C3 and C4, voltage bucking in Tx2, rectification by Q11 and Q12 and filtering by Lo and C6, and is then charged to the low-voltage battery.

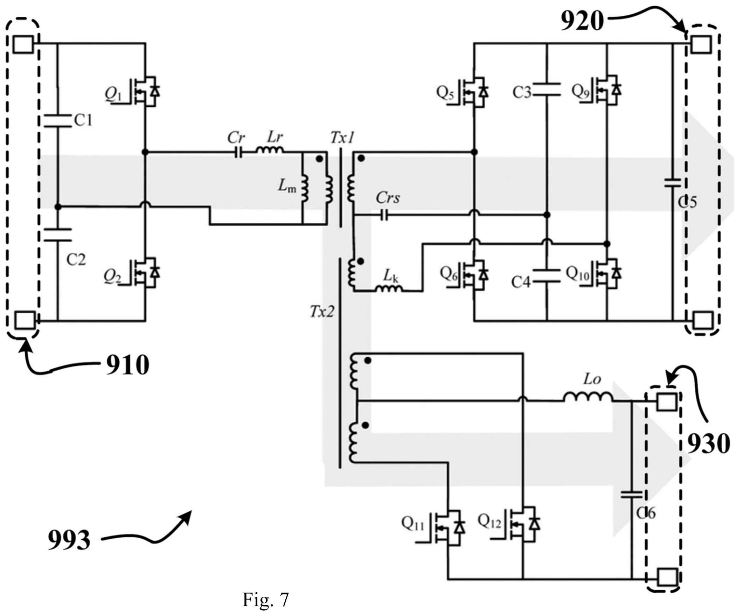

As shown in Fig. 7, when converter 500 operates in the third charging mode, external AC power arrives at Dclink through power factor correction circuit PFC and is then converted by the half bridge consisting of C1, C2, Q1 and Q2. After that, while being isolated by Tx1, it is converted by a half bridge consisting of C3, C4, Q5 and Q6 and delivered to the high-voltage battery at second port HV. Additionally, it successively experiences power conversion by the half bridge consisting of Q9, Q10, C3 and C4, voltage bucking in Tx2, rectification by Q11 and Q12 and filtering by Lo and C6, and is then charged to the low-voltage battery.

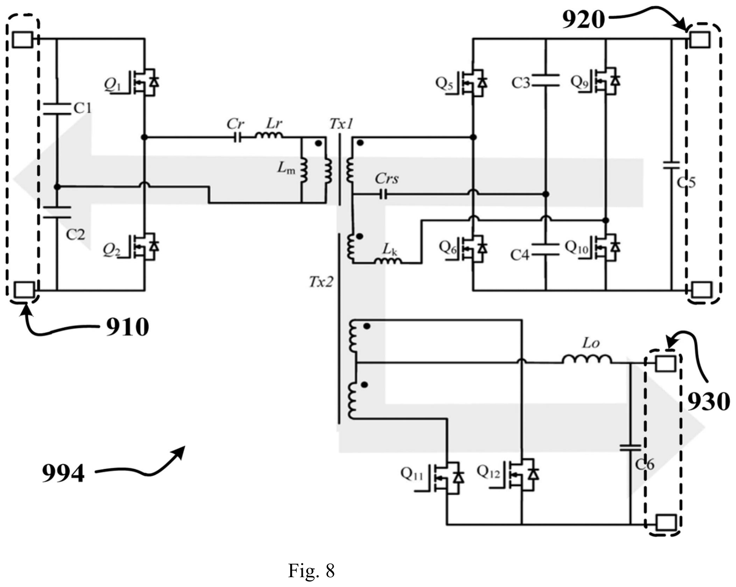

As shown in Fig. 8, when converter 500 operates in the fourth inverter mode, energy is controlled to transfer from the high-voltage battery at second port HV towards first port Dclink, accomplishing power inversion. The half bridge consisting of C3, C4, Q5 and Q6 is controlled to convert the power, and the converted power is then again converted by the half bridge consisting of C1, C2, Q1 and Q2 while being isolated by Tx1 and transmitted to the high-voltage battery at second port HV. Additionally, it successively undergoes power conversion by the half bridge consisting of Q9, Q10, C3 and C4, voltage bucking in Tx2, rectification by Q11 and Q12 and filtering by Lo and C6, and is then charged to the low-voltage battery.

The low-voltage rectifier bridge at third port LV may be either the illustrated full-wave circuit, or a full-bridge circuit. The resonant network at first port Dclink and the resonant network for the high-voltage battery at second port HV may be a series-connected LC resonant tank, or an LLC, CLLC or CLLLC resonant circuit.

Specifically, when converter 500 operates in the first pre-charging mode, a current from a battery at third port LV flows through Lo, and Q11, Q12 are controlled to convert the power. Following voltage boosting in Tx2 and rectification by the half bridge consisting of C3, C4, Q9 and Q10, the energy is charged to the capacitor for the high-voltage battery.

When converter 500 operates in the third charging mode, a phase shift angle of half-bridge switching elements Q1, Q2 at first port Dclink relative to half-bridge switch transistors Q5, Q6 for the high-voltage battery at second port HV are controlled, or their overall switching frequencies are adjusted, to enable the high-voltage battery at second port HV to provide a stable output voltage or constant output current. Moreover, duty cycles of third bridge-arm switching elements Q9, Q10 for the high-voltage battery are controlled to enable the low-voltage battery at third port LV to output a stable voltage. Timing of control in this mode of operation is essentially as shown in Fig. 11.

When converter 500 operates in the second low-voltage charging/driving mode, the duty cycles of third bridge-arm switching elements Q9, Q10 for the high-voltage battery at second port HV are controlled to enable the low-voltage battery at third port LV to provide a stable output voltage.

When converter 500 operates in the fourth inverter mode, a phase shift angle of half-bridge switching elements Q5, Q6 for the high-voltage battery at second port HV relative to half-bridge switching elements Q1, Q2 at first port Dclink are controlled, or their overall switching frequencies are adjusted, to enable the high-voltage battery at second port HV to provide a stable output voltage or constant output current. Moreover, the duty cycles of third bridge-arm switching elements Q9, Q10 for the high-voltage battery at second port HV are controlled to enable the low-voltage battery at third port LV to provide a stable output voltage.

In summary, no matter the three-port converter of the present invention operates in the first pre-charge mode, or in the second low-voltage charging/driving mode, or in the third charging mode, or in the fourth inverter mode, energy is always input through only one of the ports and transmitted to the remaining two ports. In addition, third bridge-arm switching elements Q9, Q10 for the high-voltage battery at second port HV provide decoupling of power and independent control. The half-bridge resonant circuit can provide soft switching over a wide range and enables the use of fewer switching elements, resulting in reduced integration complexity, smaller device footprint and savings in device cost.

The above embodiments may be further optimized. First-port first capacitive element Cr is optional, and its resonant capability may be instead provided by first capacitive element C1 and second capacitive element C2. Second-port first capacitive element Crs may be used as a DC isolation capacitor and is also optional. First electromagnetic element Tx1 may be magnetically integrated with first-port first inductive element Lr, and second electromagnetic element Tx2 with second-port first inductive element Lk and third-port first inductive element Lo.

As noted above, in the converter of the present invention, when a PFC circuit is connected upstream of first port Dclink (910), half-bridge capacitors C1 and C2 may be shared with the PFC's output bus capacitor.

Further, according to the present invention, the resonant network at first port Dclink (910) and the resonant network for the high-voltage battery may be a series-connected LC resonant tank, or an LLC, CLLC or CLLLC resonant circuit. The CLLLC resonant tank is shown in Fig. 9. Second-port second inductive element Lrs and second-port second capacitive element Cs may be omitted from the circuit of Fig. 9. When second-port first capacitive element Crs has a large capacitance, or is omitted, if Lm/Lr is large, the series-connected LC resonant tank is obtained; or if Lm/Lr is small, the LLC resonant is obtained. If Lrs is omitted from the circuit of Fig. 9, the CLLC resonant tank is obtained.

Furthermore, according to embodiments described herein, the low-voltage rectifier bridge (Q11, Q12) at third port LV may be the illustrated full-wave circuit, or a full bridge circuit or current multiplier/rectifier.

Of course, in the topologies disclosed herein, all the switching elements may be IGBT or MOSFET devices optionally with diodes, or switch transistors of different types, these devices are included in the scope of the present invention.

According to the present invention, half-bridge capacitors C1, C2 at first port Dclink may be swapped in position with half-bridge switch transistors Q1, Q2, and half-bridge switch transistors Q5, Q6 for the high-voltage battery at second port HV may also be swapped with half-bridge capacitors C3, C4, resulting in a modified isolated three-port converter, as shown in Fig. 10. In contrast to the prior art, according to the present invention, the phase shift angle of Q9, Q10 relative to Q5, Q6 is controlled to control the output voltage at second port LV in the second low-voltage charging/driving mode. The phase of the bridge arm consisting of Q9 and Q10 may precede or lag behind the bridge arm consisting of Q5 and Q6. Fig. 12 shows essential timing of waveforms involved in the scheme.

It should be noted that the foregoing embodiments are presented only to more clearly illustrate the subject matter of the present invention and, as will be understood by those skilled in the art, the present invention is not limited to these embodiments. Any and all obvious variations, substitutions or alternatives made in light of the above teachings, as well as other embodiments not departing from the scope of the invention, are intended to be embraced within the scope thereof.

## Claims

1. A three-port control method, **characterized in** comprising a first circuit configuration step (100) and a second drive control step (200), wherein in the first circuit configuration step (100), a first conversion circuit (981) at first port Dclink (910), a second conversion circuit (982) at second port HV (920) and a third conversion circuit (983) at third port LV (930) are configured, the first conversion circuit (981) comprising a first winding (971), which shares a magnetic path, and exchange energy, with a second winding (972) in the second conversion circuit (982) through a first electromagnetic element Tx1 (941), the second conversion circuit (982) comprising a third winding (973), which shares a magnetic path, and exchanges energy, with a fourth winding (974) and a fifth winding (975) in the third conversion circuit (983) through a second electromagnetic element Tx2 (942), and
wherein in the second drive control step (200), drive timing and/or amplitude adjustments are made to switching elements in the first conversion circuit (981), the second conversion circuit (982) and the third conversion circuit (983) to alter directions of energy conversion or transfer in the magnetic paths, and at any instant of time, only one of the first port Dclink (910), the second port HV (920) and the third port LV (930) is connected to an excitation source, with one or both of the remaining ports being connected to a load.

2. The three-port control method of claim 1, wherein: in the first conversion circuit (981), a first capacitive element C1 (911) and a second capacitive element C2 (922) make up a first capacitive half-bridge, and a first switching element Q1 (914) and a second switching element Q2 (913) make up a first half-bridge switch, the first capacitive half-bridge constituting a first resonant network together with the first winding (971) under the control of the first half-bridge switch;
in the second conversion circuit (982): a third capacitive element C3 (923) and a fourth capacitive element C4 (924) make up a second capacitive half-bridge; a fifth switching element Q5 (921) and a sixth switching element Q6 (922) make up a second half-bridge switch; a ninth switching element Q9 (925) and a tenth switching element Q10 (926) make up a third bridge-arm switch; center taps of the second winding (972) and the third winding (973) form a star-shaped wye through a second-port first capacitive element Crs (954) and the second capacitive half-bridge; the second half-bridge switch is connected in parallel to the third bridge-arm switch; the second winding (972) and the second half-bridge switch form another star-shaped wye; and the third winding (973) and the third bridge-arm switch form yet another star-shaped wye; and
the third conversion circuit (983) comprises a third half-bridge switch, a third full-wave structure and a third full bridge or a current multiplier/rectifier; and the third conversion circuit (983) exchanges energy through a loop incorporating the fourth winding (974) and the fifth winding (975),
the third half-bridge switch made up of an eleventh switching element Q11 (931) and a twelfth switching element Q12 (932), center taps of the fourth winding (974) and the fifth winding (975) connected to one terminal of a sixth capacitive element C6 (933) via a third-port first inductive element Lo (934), another terminal of the sixth capacitive element C6 (933) connected to the fourth winding (974) and the fifth winding (975) via the eleventh switching element Q11 (931) and the twelfth switching element Q12 (932), respectively.

3. The three-port control method of claim 2, further comprising a third configuration optimization step (300), wherein in the third configuration optimization step (300), a first-port first capacitive element Cr (951) and/or a first-port first inductive element Lr (952) is/are connected in series, and a first-port second inductive element Lm (953) in parallel, within the first resonant network, wherein the first-port first inductive element Lr (952) is separate from, or magnetically integrated with, the first electromagnetic element Tx1 (941); the star-shaped wye incorporating the third bridge-arm switch is connected to the third winding (973) via a second-port first inductive element Lk (955); and the second electromagnetic element Tx2 (942) is separate from, or magnetically integrated with, the second-port first inductive element Lk (955) and the third-port first inductive element Lo (934).

4. The three-port control method of claim 3, further comprising a fourth parameter optimization step (400), wherein: the second conversion circuit (982) further comprises a second-port second inductive element Lrs (956) and a second-port second capacitive element Cs (957), the second-port second inductive element Lrs (956) and the second-port second capacitive element Cs (957) are connected in series with each other and then to bridge arms of the second half-bridge switch via the second winding (972), thereby forming a CLLLC resonant tank; and
in the fourth parameter optimization step (400), parameters are adjusted according to preset resonance thresholds, as required by a mode of operation, or by the load, the resonance thresholds including a first resonance threshold and a second resonance threshold, the adjustment comprising: if a ratio of parameters of the first-port second inductive element Lm (953) and the first-port first inductive element Lr (952) is greater than the first resonance threshold, then configuring the second conversion circuit (982) as a series-connected LC resonant tank; or if the ratio of the parameters of the first-port second inductive element Lm (953) and the first-port first inductive element Lr (952) is less than the second resonance threshold, then configuring the second conversion circuit (982) as an LLC resonant tank; or if the second-port second inductive element Lrs (956) is omitted, then configuring the second conversion circuit (982) as a CLLC tank.

5. The three-port control method of claim 1, 2, 3 or 4, wherein the first capacitive half-bridge is provided by or replaced with an output bus capacitor in a power factor corrector (PFC) connected to first port Dclink (910).

6. The three-port control method of claim 2, 3 or 4, wherein:
second port HV (920) is connected to a second battery bank through two terminals of the second capacitive half-bridge, or after being connected in parallel to fifth capacitive element C5, and third port LV (930) is connected to a third battery bank through the terminals of the sixth capacitive element C6 (933), the second battery bank having a second rated voltage higher than a third rated voltage of the third battery bank, with a difference between the second rated voltage and the third rated voltage being greater than a preset voltage threshold;
in the second drive control step (200), depending on the drive timing and/or amplitude configurations in the first circuit configuration step (100), operation is initiated in a first pre-charge mode (991), a second low-voltage charging/driving mode (992), a third charging mode (993) or a fourth inverter mode (994);
in the first pre-charge mode, a DC excitation is provided by third port LV (930), and second port HV (920) is connected to the load, without participation of first port Dclink (910) in energy exchange;
in the second low-voltage charging/driving mode, a DC excitation is provided by second port HV (920), and third port LV (930) is connected to the load, without participation of first port Dclink (910) in energy exchange;
in the third charging mode, an AC excitation is provided by first port Dclink (910), and second port HV (920) and/or third port LV (930) is/are connected to the load; and
in the fourth inverter mode, a DC excitation is provided by second port HV (920), and the other ports are connected to the load.

7. A converter (500), comprising a first conversion unit (510) and a second drive control unit (520), the first conversion unit (510) comprising a first conversion circuit (981) at first port Dclink (910), a second conversion circuit (982) at second port HV (920) and a third conversion circuit (983) at third port LV (930), the first conversion circuit (981) comprising a first winding (971), which shares a magnetic path, and exchanges energy, with a second winding (972) in the second conversion circuit (982) through a first electromagnetic element Tx1 (941), the second conversion circuit (982) comprising a third winding (973), which shares a magnetic path, and exchanges energy, with a fourth winding (974) and a fifth winding (975) in the third conversion circuit (983) through a second electromagnetic element Tx2 (942), wherein:
in the first conversion circuit (981), a first capacitive element C1 (911) and a second capacitive element C2 (922) make up a first capacitive half-bridge, and a first switching element Q1 (914) and a second switching element Q2 (913) make up a first half-bridge switch, the first capacitive half-bridge constituting a first resonant network together with the first winding (971) under the control of the first half-bridge switch;
in the second conversion circuit (982): a third capacitive element C3 (923) and a fourth capacitive element C4 (924) make up a second capacitive half-bridge; a fifth switching element Q5 (921) and a sixth switching element Q6 (922) make up a second half-bridge switch; a ninth switching element Q9 (925) and a tenth switching element Q10 (926) make up a third bridge-arm switch; center taps of the second winding (972) and the third winding (973) form a star-shaped wye through a second-port first capacitive element Crs (954) and the second capacitive half-bridge; the second half-bridge switch is connected in parallel to the third bridge-arm switch; the second winding (972) and the second half-bridge switch form another star-shaped wye; and the third winding (973) and the third bridge-arm switch form yet another star-shaped wye;
the third conversion circuit (983) comprises a third half-bridge switch, a third full-wave structure, a third full bridge or a current multiplier/rectifier and exchanges energy through a loop incorporating the fourth winding (974) and the fifth winding (975); and
the second drive control unit (520) comprises drive or synchronization circuits associated respectively with the first conversion circuit (981), the second conversion circuit (982) and the third conversion circuit (983), and the second drive control unit (520) is configured to make drive timing and/or amplitude adjustments to the switching elements to alter directions of energy conversion or transfer in the magnetic paths, wherein at any instant of time, only one of first port Dclink (910), second port HV (920) and third port LV (930) is connected to an excitation source, with one or both of the remaining ports being connected to a load.

8. The converter (500) of claim 7, wherein: the third half-bridge switch is made up of an eleventh switching element Q11 (931) and a twelfth switching element Q12 (932); center taps of the fourth winding (974) and the fifth winding (975) are connected to one terminal of a sixth capacitive element C6 (933) via a third-port first inductive element Lo (934); and another terminal of the sixth capacitive element C6 (933) is connected to the fourth winding (974) and the fifth winding (975) via the eleventh switching element Q11 (931) and the twelfth switching element Q12 (932), respectively.

9. The converter (500) of claim 8, further comprising a third configuration optimization unit (530), wherein: the third configuration optimization unit (530) comprises a first-port first capacitive element Cr (951) and/or a first-port first inductive element Lr (952), the first-port first capacitive element Cr (951) and/or the first-port first inductive element Lr (952) are/is connected in series within the first resonant network, a first-port second inductive element Lm (953) is connected in parallel within the first resonant network; the first-port first inductive element Lr (952) is separated from, or magnetically integrated with, the first electromagnetic element Tx1 (941); the star-shaped wye incorporating the third bridge-arm switch is connected to the third winding (973) via second-port first inductive element Lk (955); and the second electromagnetic element Tx2 (942) is separated from, or magnetically integrated with, a second-port first inductive element Lk (955) and the third-port first inductive element Lo (934).

10. The converter (500) of claim 9, further comprising a fourth parameter optimization unit (540), wherein: the fourth parameter optimization unit (540) comprises a second-port second inductive element Lrs (956) and a second-port second capacitive element Cs (957), the second-port second inductive element Lrs (956) and the second-port second capacitive element Cs (957) are connected in series with each other and then to bridge arms of the second half-bridge switch via the second winding (972), thereby forming a CLLLC resonant tank,
the second conversion circuit (982) is configured as a series-connected LC resonant tank if a ratio of parameters of the first-port second inductive element Lm (953) and the first-port first inductive element Lr (952) is greater than a first resonance threshold, or as an LLC resonant tank if the ratio of the parameters of the first-port second inductive element Lm (953) and the first-port first inductive element Lr (952) is less than a second resonance threshold, or as a CLLC tank if the second-port second inductive element Lrs (956) is omitted.

11. The converter (500) of claim 7, 8, 9 or 10, wherein the first capacitive half-bridge is provided by or replaced with an output bus capacitor in a power factor corrector (PFC) connected to first port Dclink (910).

12. The converter (500) of claim 8, 9 or 10, wherein:
second port HV (920) is connected to a second battery bank through two terminals of the second capacitive half-bridge, or after being connected in parallel to fifth capacitive element C5, and third port LV (930) is connected to a third battery bank through the terminals of the sixth capacitive element C6 (933), the second battery bank having a second rated voltage higher than a third rated voltage of the third battery bank, with a difference between the second and third rated voltages being greater than a preset voltage threshold;
in a second drive control step (200), depending on drive timing and/or amplitude configurations in a first circuit configuration step (100), operation is initiated in a first pre-charge mode, a second low-voltage charging/driving mode, a third charging mode or a fourth inverter mode;
in the first pre-charge mode, a DC excitation is provided by third port LV (930), and second port HV (920) is connected to the load, without participation of first port Dclink (910) in energy exchange;
in the second low-voltage charging/driving mode, a DC excitation is provided by second port HV (920), and third port LV (930) is connected to the load, without participation of first port Dclink (910) in energy exchange;
in the third charging mode, an AC excitation is provided by first port Dclink (910), and second port HV (920) and/or third port LV (930) is/are connected to the load; and
in the fourth inverter mode, a DC excitation is provided by second port HV (920), and the other ports are connected to the load.

13. A computer storage medium (903), comprising a storage medium body storing thereon a computer program, which, when executed by a microprocessor, implements the three-port control method of any one of claims 1 to 6.

14. A power supply (906), comprising the converter (500) of any one of claims 7 to 12 and/or the computer storage medium (903) of claim 13.

15. A controller (901), comprising the converter (500) of any one of claims 7 to 12 or configured to provide the switching elements in the converter (500) with necessary drive and/or synchronization signals, and/or comprising the computer storage medium (903) of claim 13.
